# FASCICULE DE BREVET EUROPEEN

(11) **EP 1 375 223 B1**
(45) Date de publication et mention de la délivrance du brevet: **19.01.2005**
(21) Numéro de dépôt: 03291574.6
(22) Date de dépôt: 26.06.2003
(51) Int. Cl.: B60J 5/10, B60J 5/12

(54) **Véhicule à volet arrière à deux positions ouvertes**
Fahrzeug mit Heckklappe mit zwei Offenstellungen
Vehicle with a rear door with two open positions

(30) Priorité: 28.06.2002 FR 0208133
(43) Date de publication de la demande: 02.01.2004
(73) Titulaire: Peugeot Citroen Automobiles SA, 92200 Neuilly sur Seine (FR)
(72) Inventeur: Devaux, Daniel, 77183 Croissy-Beaubourg (FR); Calvet, Frédéric, 92500 Rueil Malmaison (FR)
(74) Mandataire: Thinat, Michel

(56) Documents cités:
- EP-A- 0 989 009
- EP-A- 1 134 104
- WO-A-94/01297
- US-A- 6 007 139

## Description

L'invention concerne en général les véhicules automobiles et les volets arrière de véhicules automobiles, notamment les véhicules de type break et les véhicules équipés de volets connus sous le nom de « hobby ».

Plus précisément, l'invention concerne un véhicule automobile selon le préambule de la revendication 1, en particulier du document de brevet EP 0 989 0096A.

Des véhicules de ce type sont connus de l'art antérieur.

Le volet arrière, dans sa position ouverte, dépasse très largement au-dessus du toit du véhicule. Dans un espace intérieur de hauteur réduite, un sous-sol par exemple ou un parking souterrain, le bord du volet vient heurter le plafond, ce qui risque d'endommager la peinture du volet ou de cabosser celui-ci. De plus, le volet arrière balaye derrière le véhicule un espace très étendu en passant de sa position fermée à sa position ouverte.

Dans ce contexte, la présente invention a pour but de pallier le défaut mentionné ci-dessus.

A cette fin, le dispositif de l'invention, par ailleurs conforme à la définition générique qu'en donne le préambule ci-dessus, est essentiellement caractérisé en ce que le volet comprend des premier et second panneaux, le premier panneau s'étendant dans la position fermée du volet le long du premier bord transversal de l'ouverture de chargement entre les premier et second bords latéraux, le second panneau s'étendant dans la position fermée du volet le long du second bord transversal de l'ouverture de chargement entre les premier et second bords latéraux, le premier panneau étant escamotable dans le second panneau, le premier dispositif d'articulation comprenant des moyens pour faire pivoter le second panneau autour d'un premier axe transversal relativement plus proche du premier bord transversal que du second, entre une position d'obturation correspondant à la position fermée du volet arrière et une position haute plus proche du premier bord transversal de l'ouverture arrière que la position d'obturation, le volet arrière adoptant ainsi sélectivement sa position fermée ou une première position ouverte dans laquelle le premier panneau est escamoté dans le second panneau et le second panneau est dans sa position haute.

Dans un mode de réalisation possible de l'invention, le véhicule comprend un second dispositif d'articulation du second panneau par rapport au second bord transversal de l'ouverture, ce second dispositif d'articulation adoptant sélectivement une configuration d'articulation dans laquelle le second panneau est lié au second bord transversal de l'ouverture, ou une configuration de libération dans laquelle le second panneau est libre par rapport au second bord transversal, ce second dispositif d'articulation étant dans sa configuration de libération quand le second panneau passe de sa position d'obturation à sa position haute .

Avantageusement, les moyens pour faire pivoter le second panneau peuvent comprendre au moins un bras pivotant présentant des première et seconde extrémités opposées et monté par sa première extrémité pivotant autour du premier axe transversal, et un dispositif de fixation du bras pivotant par sa seconde extrémité sur le second panneau.

De préférence, dans la configuration d'articulation du second dispositif d'articulation, le second panneau peut être libre en rotation par rapport au second bord transversal de l'ouverture autour d'au moins un second axe transversal, et peut être sélectivement mobile entre sa position d'obturation et une position basse dans laquelle le second panneau a pivoté vers l'extérieur du véhicule autour dudit second axe transversal, le volet arrière adoptant ainsi sélectivement sa position fermée ou une seconde position ouverte dans laquelle le premier panneau est escamoté dans le second panneau et le second panneau est dans sa position basse .

Par exemple, le bras pivotant peut être téléscopique, sa longueur variant sélectivement entre un minimum et un maximum, la longueur du bras pivotant étant minimum dans la position d'obturation et dans la position haute du second panneau, et maximum dans la position basse du second panneau.

Avantageusement, le dispositif de fixation de la seconde extrémité du bras pivotant sur le second panneau peut adopter sélectivement une configuration rigide dans laquelle le bras pivotant est rigidement lié au second panneau, ou une configuration de rotation dans laquelle la seconde extrémité est liée au second panneau et libre en rotation autour d'un troisième axe transversal par rapport à celui-ci, le dispositif de fixation étant dans sa configuration rigide quand le second panneau passe de sa position d'obturation à sa position haute et dans sa configuration de rotation quand second panneau passe de sa position d'obturation à sa position basse .

De préférence, le dispositif de fixation de la seconde extrémité du bras pivotant sur le second panneau peut comprendre le troisième axe transversal fixe et solidaire du second panneau, un manchon solidaire de la seconde extrémité du bras pivotant et monté libre en rotation autour du troisième axe transversal, et au moins un pion rétractable lié au second panneau, le manchon comprenant un orifice de blocage, le pion rétractable étant fixe en rotation autour du troisième axe transversal et sélectivement mobile par rapport au second panneau entre une position de blocage dans laquelle le pion rétractable est engagé dans l'orifice de blocage du manchon , et une position de libération dans laquelle le pion rétractable n'est pas engagé dans l'orifice de blocage.

Par exemple, le premier dispositif d'articulation peut comprendre un premier moteur commandant le pivotement du second panneau autour du premier axe transversal.

Avantageusement, le premier dispositif d'articulation peut comprendre un second moteur commandant le déploiement et la rétractation du bras pivotant.

Par exemple, le premier dispositif d'articulation peut comprendre un amortisseur à gaz, cet amortisseur comprenant un corps lié à la caisse, et un piston lié au bras pivotant et coulissant à l'intérieur du corps.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en coupe longitudinale du véhicule de l'invention, le volet arrière étant en position fermée,
- la figure 2 est une vue équivalente à la figure 1, le volet arrière étant dans sa première position ouverte,
- la figure 3 est une vue équivalente à la figure 1, le volet arrière étant dans sa seconde position ouverte,
- la figure 4 est une vue en coupe d'un détail de la figure 1,
- la figure 5 est une vue en coupe d'un détail de la figure 2,
- la figure 6 est une vue en coupe dans le plan VI de la figure 1
- la figure 7 est une vue de côté d'un détail de la figure 1,
- la figure 8 est une vue de côté d'un détail de la figure 3,
- les figures 9 et 10 sont des vues en coupe dans le plan IX de la figure 8, le dispositif de fixation du bras pivotant sur le second panneau étant respectivement en configuration rigide et en configuration de rotation,
- la figure 11 est une vue agrandie d'un détail de la figure 1, le second dispositif d'articulation étant en configuration d'articulation,
- la figure 12 est une vue équivalente à la figure 11, le second dispositif d'articulation étant en configuration de libération,
- la figure 13 est une vue équivalente à la figure 11, le second dispositif d'articulation étant dans une configuration intermédiaire entre sa configuration de libération et sa configuration d'articulation,
- la figure 14 est une vue agrandie d'un détail de la figure 3, le second dispositif d'articulation étant en configuration d'articulation, et le second panneau étant en position basse, et
- la figure 15 est une vue en coupe horizontale dans le plan XV de la figure 11.

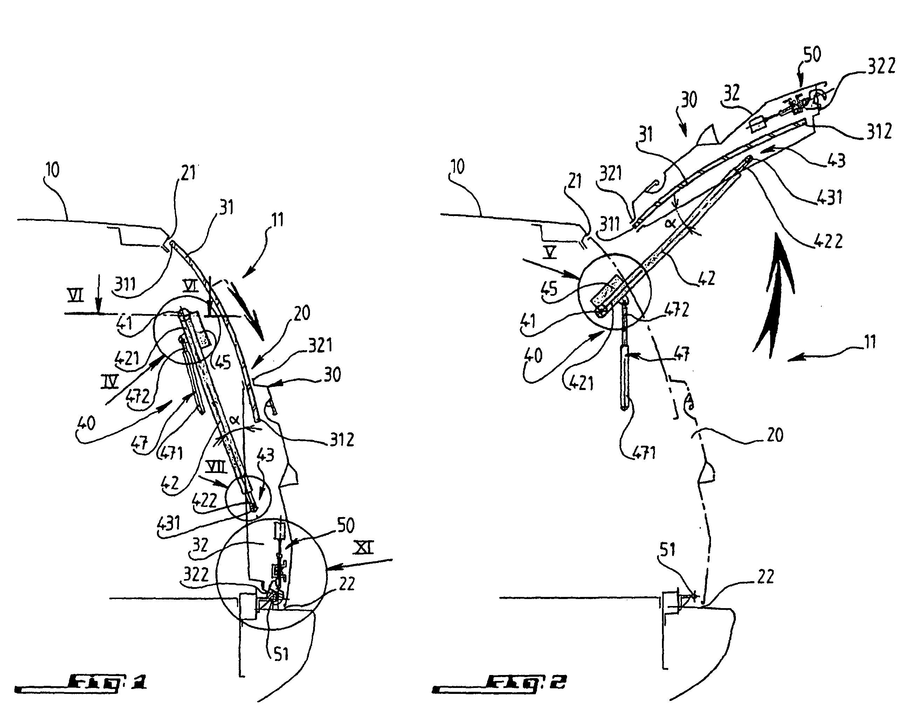

Le véhicule automobile représenté sur la figure 1 comprend une caisse 10 présentant une face arrière 11 percée d'une ouverture de chargement arrière 20.

Cette ouverture de chargement 20 est délimitée par des premier et second bords transversaux opposés 21 et 22 généralement horizontaux, et des premier et second bords latéraux opposés joignant chacun une extrémité du premier bord transversal 21 à une extrémité du second bord transversal 22.

Le premier bord transversal 21 est situé plus haut et plus proche du toit du véhicule que le second bord transversal 22, situé plus bas et plus près du sol.

L'ouverture de chargement 20 occupe la plus grande partie de la face arrière 11, celle-ci étant généralement légèrement inclinée par rapport à la verticale, dans un sens tel que le premier bord transversal 21 est situé relativement plus en avant que le second bord transversal 22.

L'avant et l'arrière sont définis relativement au sens de déplacement normal du véhicule.

Le véhicule comprend également un volet arrière 30 mobile par rapport à la caisse 10, entre une position fermée dans laquelle le volet arrière 30 obture l'ouverture arrière 20 et au moins une position ouverte dans laquelle le volet arrière 30 dégage l'ouverture arrière 20, et un premier dispositif d'articulation 40 du volet arrière 30 sur la caisse 10.

Selon l'invention, le volet 30 comprend des premier et second panneaux 31 et 32, le premier panneau 31 s'étendant, dans la position fermée du volet 30, le long du premier bord transversal 21 de l'ouverture de chargement 20 entre les premier et second bords latéraux, et le second panneau 32 s'étendant, dans la position fermée du volet 30, le long du second bord transversal 22 de l'ouverture de chargement 20 entre les premier et second bords latéraux.

Le premier panneau 31 est escamotable dans le second panneau 32, par un mouvement de translation de haut en bas, suivant une direction générale sensiblement perpendiculaire à la direction transversale.

Le premier dispositif d'articulation 40 comprend des moyens pour faire pivoter le second panneau 32 autour d'un premier axe transversal 41 relativement plus proche du premier bord transversal 21 de l'ouverture arrière 20 que du second, entre une position d'obturation correspondant à la position fermée du volet arrière 30, et une position haute plus proche du premier bord transversal 21 de l'ouverture arrière 20 que la position d'obturation.

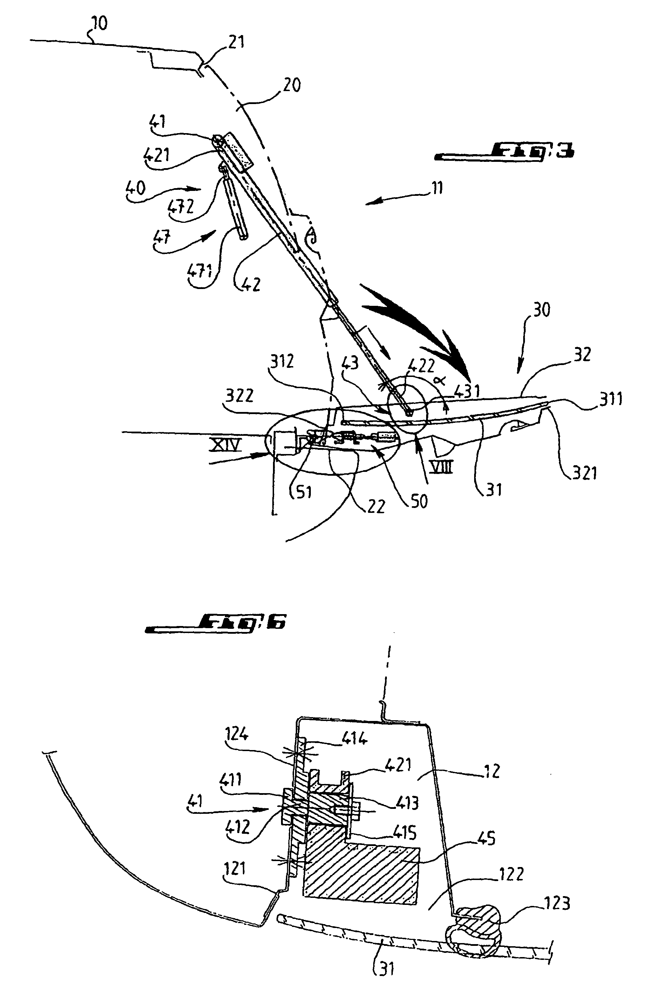

Le volet arrière 30 adopte ainsi sélectivement sa position fermée ou une première position ouverte dans laquelle le premier panneau 31 est escamoté dans le second panneau 32 et le second panneau 32 est dans sa position haute. Cette position ouverte est illustrée sur la figure 2. Comme le premier panneau est rentré dans le second, le volet arrière 30 ne fait saillie au dessus du véhicule que sur une faible hauteur dans sa première position d'ouverture.

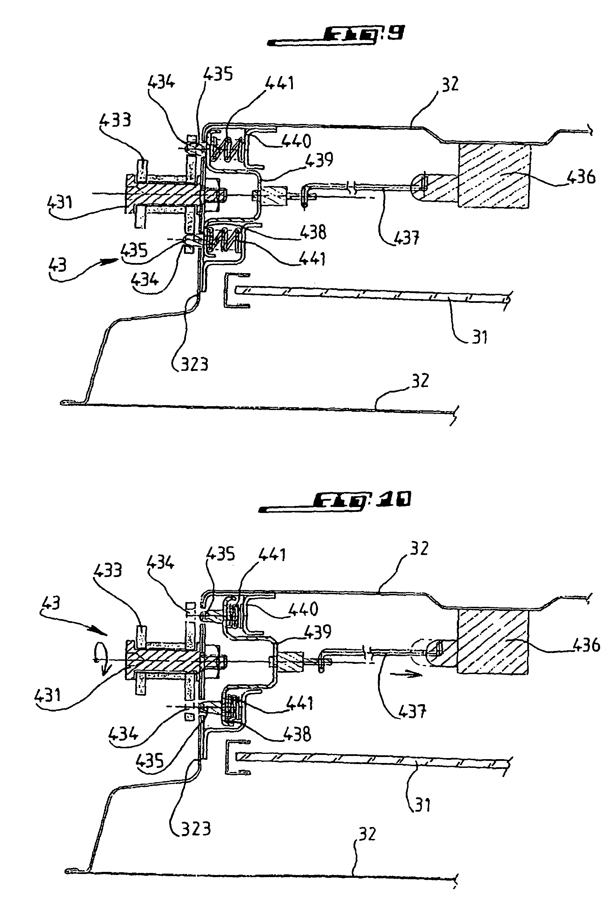

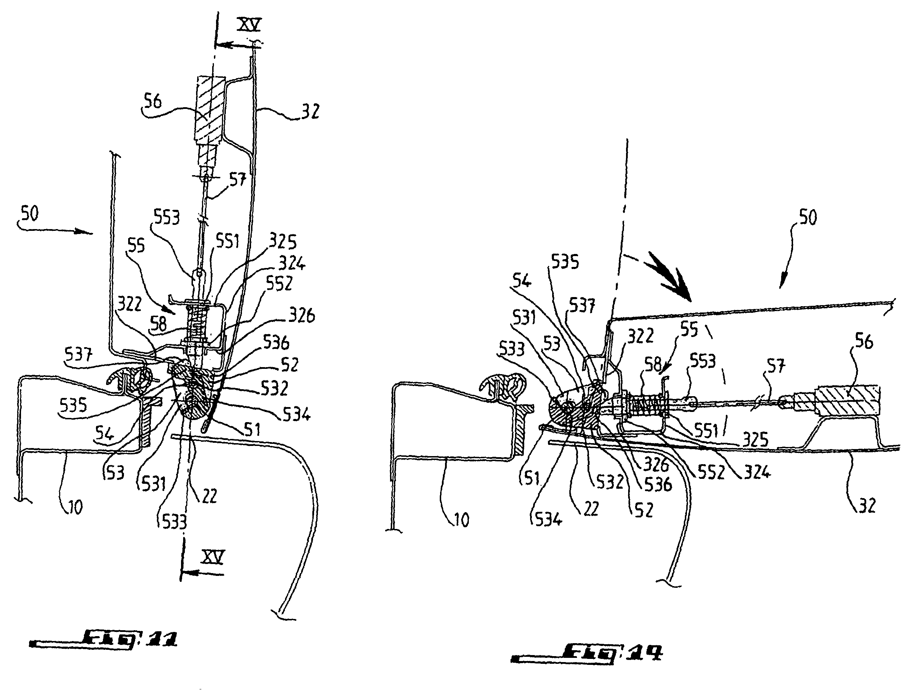

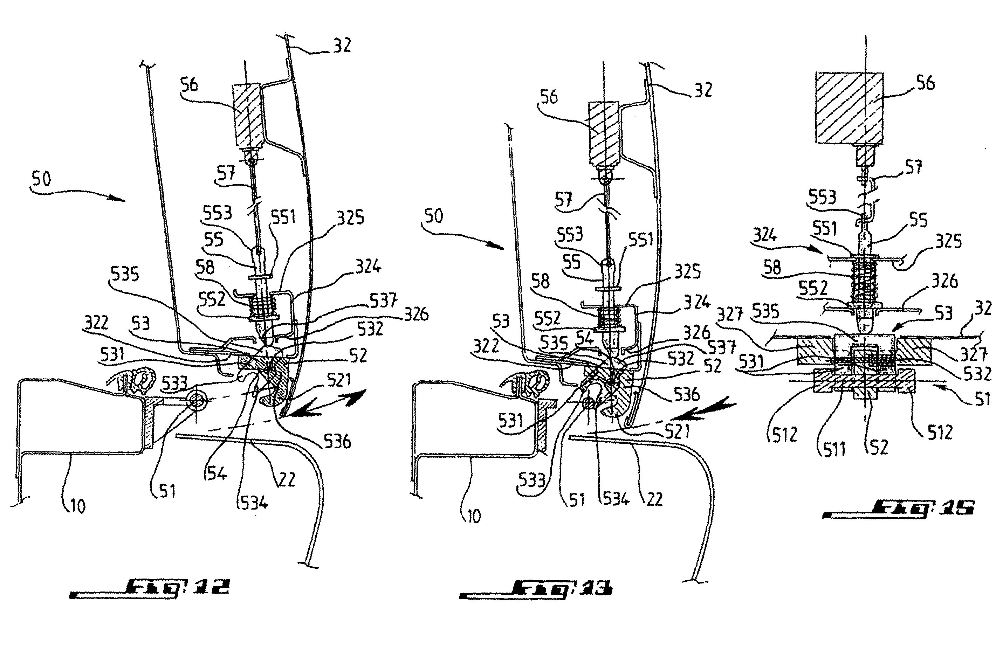

Dans le mode de réalisation représenté sur les figures 1 à 14, les premier et second panneaux 31 et 32 présentent, en section dans un plan perpendiculaire à la direction transversale, des dimensions sensiblement égales. Le premier panneau 31 peut ainsi rentrer intégralement dans le second.

Le premier panneau 31 est en général une vitre, et le second panneau 32 un bas volet en tôles.

Par ailleurs, le premier panneau 31 présente des premiers côtés transversaux supérieur et inférieur 311 et 312 opposés, sensiblement horizontaux, et le second panneau 32 présente des seconds côtés transversaux supérieur et inférieur 321 et 322 opposés, sensiblement horizontaux.

Dans la position fermée du volet arrière 30, le premier côté supérieur 311 s'étend le long du premier bord transversal 21 de l'ouverture arrière 20, le second côté inférieur 322 s'étend le long du second bord transversal 22 de l'ouverture arrière 20, et le premier côté inférieur 312 est engagé dans une fente pratiquée dans le second côté supérieur 321.

Le premier axe transversal 41, autour duquel pivote le second panneau 32, est situé relativement plus vers l'avant du véhicule que le volet arrière 30, et de préférence proche de celui-ci, de façon à ce qu'il n'y ait pas de pièce en mouvement débattant profondément à l'intérieur du véhicule.

Par ailleurs, ce premier axe transversal 41 est disposé, relativement au premier panneau 31 quand le volet arrière 30 est en position fermée, de préférence plus proche du premier bord transversal supérieur 311 que du premier bord transversal inférieur 312, et dans un mode de réalisation préféré sensiblement à mi distance entre les premier bords transversaux supérieur et inférieur 311 et 312. Dans ce mode de réalisation préféré, le second côté supérieur 321, dans la position haute du second panneau 32, se trouve approximativement au niveau du toit du véhicule suivant une direction verticale, et à proximité de celui-ci suivant une direction longitudinale. L'espace balayé par le volet arrière quand celui-ci passe de sa position fermée à sa première position ouverte est ainsi minimum.

Si le premier axe transversal 41 est disposé plus près du premier côté transversal inférieur 312 que du premier côté transversal supérieur 311 en position fermée du volet arrière, ce premier axe transversal 41 doit être profondément enfoncé à l'intérieur du véhicule pour pouvoir élever suffisamment le second côté transversal supérieur 321 du second panneau 32 et ainsi suffisamment dégager l'ouverture arrière en première position ouverte du volet.

Si le premier axe transversal 41 est disposé à proximité du premier côté transversal supérieur 311 du premier panneau 31 en position fermée du volet arrière, le volet arrière balayera un espace important derrière le véhicule en passant de sa position fermée à sa première position ouverte, ce qui est un inconvénient.

La position représentée sur la figure 2 est donc un optimum pour la disposition du premier axe transversal 41.

Selon une autre caractéristique avantageuse, le véhicule comprend un second dispositif d'articulation 50 du second panneau 32 par rapport au second bord transversal 22 de l'ouverture 20, ce second dispositif d'articulation 50 adoptant sélectivement une configuration d'articulation dans laquelle le second côté inférieur 322 du second panneau 32 est lié au second bord transversal 22 de l'ouverture 20, ou une configuration de libération dans laquelle le second panneau 32 est libre par rapport au second bord transversal 22.

Ce second dispositif d'articulation 50 est dans sa configuration de libération quand le second panneau 32 passe de sa position d'obturation à sa position haute, et dans sa configuration d'articulation au moins quand le volet arrière 30 est dans sa position fermée.

Comme le montrent les figures 1 et 2, les moyens pour faire pivoter le second panneau 32 comprennent au moins un bras pivotant 42 présentant des première et seconde extrémités 421 et 422 opposées et monté par sa première extrémité 421 pivotant autour du premier axe transversal 41, et un dispositif de fixation 43 du bras pivotant 42 par sa seconde extrémité 422 sur le second panneau 32. Le premier dispositif d'articulation comprend généralement deux bras pivotants 42 identiques, disposés des deux côtés latéraux opposés du volet arrière 30, liés à deux premiers axes transversaux 41 distincts.

On va décrire ci-dessous l'articulation d'un des deux bras pivotant, l'autre bras étant articulé exactement de la même façon.

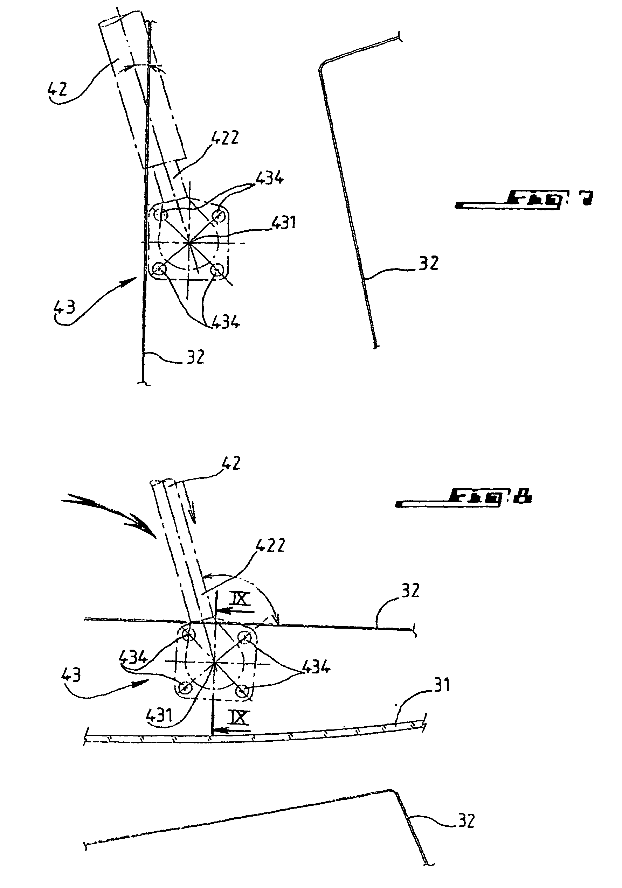

Le premier axe transversal 41 est disposé dans un logement 12 ménagé dans la caisse 10, d'un côté latéral du volet arrière, de forme allongée suivant une direction perpendiculaire à la direction transversale. Ce logement est constitué d'une tôle pliée en U et soudée sur un élément de la caisse 10 au moins par un bord libre 121 d'un côté 124 de la tête en U opposé à l'autre côté latéral du volet arrière, comme représenté sur la figure 6. Ce côté 124 du logement en U est perpendiculaire à la direction transversale.

Ce logement 12 présente une face longitudinale ouverte 122 tournée vers l'ouverture arrière 20. Le bord libre 121 soudé sur la caisse 10 crée un épaulement faisant saillie par rapport à la face ouverte 122 et forme le bord latéral de l'ouverture arrière 20.

Le volet arrière 30, dans sa position fermée, vient fermer la face ouverte 122 du logement 12.

Un joint 123, fixé sur le bord libre du U opposé à l'épaulement, vient assurer l'étanchéité entre le premier volet vitré et la caisse du véhicule.

Le bras pivotant 42 s'étend au moins partiellement dans le logement 12 en position fermée du volet arrière 30.

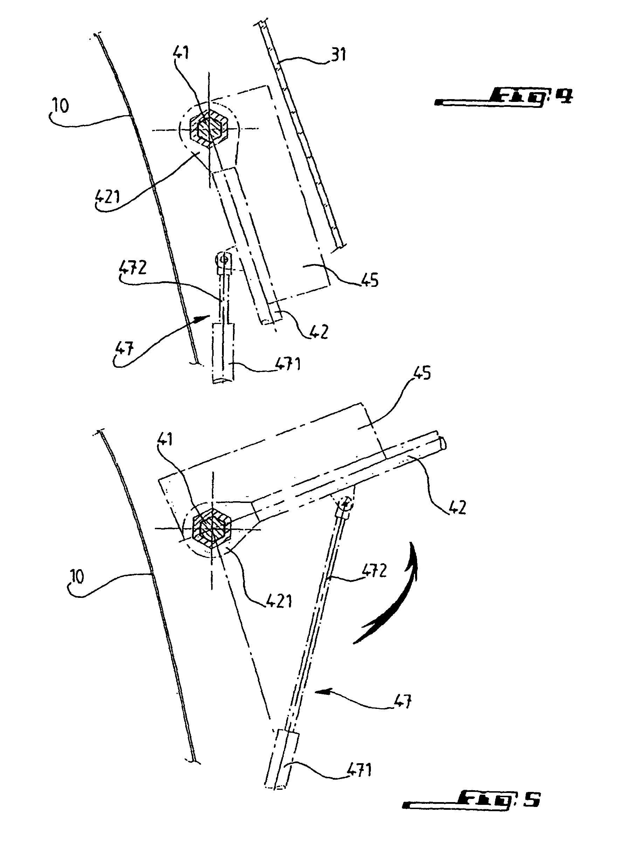

Le premier axe transversal 41, comme le montrent les figures 4 et 5, présente une section hexagonale et est solidaire de la caisse du véhicule. Il est fixé sur le côté 124 du logement 12.

Comme on peut le voir sur la figure 6, le premier axe transversal 41 comprend une tête 411 présentant une face plane perpendiculaire à la direction transversale, une partie intermédiaire 412 solidaire de la dite face plane et de section hexagonale perpendiculairement à la direction transversale, et un corps 413 prolongeant la partie intermédiaire 412 dans la direction transversale d'un côté opposé à la tête 411. Le corps 413 présente une section perpendiculaire à la direction transversale de forme hexagonale, et de dimension supérieure à celle de la section de la partie intermédiaire 412. La section de la tête 411 perpendiculairement à la direction transversale est également de dimension supérieure à celle de la section de la partie intermédiaire 412.

Une plaque de renforcement 414 est fixée sur le côté 124 du logement 12, sur une face intérieure au logement, par des vis. La plaque de renforcement 414 et le côté 124 portent chacun un orifice hexagonal, situés dans le prolongement l'un de l'autre. La partie intermédiaire 412 du premier axe transversal 41 traverse ces deux orifices, la tête 411 étant située à l'extérieur du logement 12 et plaquée contre le côté 124 par sa face plane, et le corps 413 étant situé à l'intérieur du logement 12 et plaqué contre la plaque de renforcement 414 par une face axiale. La partie intermédiaire 412 est solidaire de cette même face axiale du corps 413.

Le corps 413 de l'axe 41 traverse la première extrémité 421 du bras pivotant 42, comme le montre la figure 6. Une plaque de blocage 415 vissée sur une autre face axiale du corps 413 opposée à la plaque de renforcement 414, bloque la première extrémité 421 du bras pivotant 42 en translation dans une première direction transversale. Cette première extrémité 421 est bloquée en translation dans une seconde direction transversale opposée à la première par la plaque de renforcement 414.

Le premier dispositif d'articulation 40 comprend un premier moteur 45 commandant le pivotement du second panneau 32 autour du premier axe transversal 41. Ce moteur 45 est solidaire du bras pivotant 42 et entraîne celui-ci grâce à section hexagonale du premier axe transversal 41.

Le premier dispositif d'articulation 40 comprend encore un amortisseur à gaz 47, cet amortisseur comprenant lui-même un corps 471 lié à la caisse, et un piston 472 lié au bras articulé 42 et coulissant à l'intérieur du corps 471.

Le corps 471 et le piston 472 sont montés pivotants dans le même plan que le bras pivotant 42, autour d'axes transversaux respectifs non représentés, ces axes étant solidaires respectivement de la caisse 10 et du bras pivotant 42.

Cet amortisseur est facultatif, et permet de ralentir et d'adoucir les mouvement du second panneau quand il se déplace de sa position fermée à sa position haute.

Comme le montre la figure 3, dans la configuration d'articulation du second dispositif d'articulation 50, le second panneau 32 est libre en rotation par rapport au second bord transversal 22 de l'ouverture 20 autour d'au moins un second axe transversal 51.

En général, le second dispositif d'articulation 50 comprend deux seconds axes transversaux 51 identiques et alignés, disposés de deux côtés opposés du second bord transversal 22.

Le second panneau 32 est sélectivement mobile entre sa position d'obturation et une position basse dans laquelle le second panneau 32 a pivoté vers l'extérieur du véhicule autour desdits seconds axes transversaux 51, le second côté inférieur 322 du second panneau 32 restant lié au second bord transversal 22 de l'ouverture arrière, et le second côté supérieur 321 du second panneau 32 venant se placer de telle sorte que le second panneau 32 soit sensiblement horizontal .

Le volet arrière 30 adopte ainsi sélectivement sa position fermée ou une seconde position ouverte dans laquelle le premier panneau 31 est escamoté dans le second panneau 32 et le second panneau 32 est dans sa position basse. Cette seconde position ouverte est connue sous le vocable anglo-saxon de « Hobby ». On la trouve fréquemment sur des véhicules utilitaires présentant une plate-forme arrière délimitée par un rebord en tôle surmonté d'une bâche. Le côté arrière du rebord peut pivoter pour se place à plat, ce qui permet de charger plus facilement le véhicule.

On voit clairement sur la figure 3 que le bras pivotant 42 est téléscopique, sa longueur variant sélectivement entre un minimum et un maximum, la longueur du bras pivotant étant minimum dans la position d'obturation et dans la position haute du second panneau 32, et maximum dans la position basse du second panneau 32.

Le premier dispositif d'articulation 40 comprend un second moteur, non représenté, commandant le déploiement et la rétractation du bras pivotant 42.

Ce second moteur est porté par le bras pivotant 42.

Le dispositif de fixation 43 de la seconde extrémité 422 du bras pivotant 42 sur le second panneau 32 adopte sélectivement une configuration rigide dans laquelle le bras pivotant 42 est rigidement lié au second panneau 32, ou une configuration de rotation dans laquelle la seconde extrémité 422 est liée au second panneau 32 et libre en rotation autour d'un troisième axe transversal 431 par rapport à celui-ci.

Le dispositif de fixation 43 est dans sa configuration rigide quand le second panneau 32 passe de sa position d'obturation à sa position haute et dans sa configuration de rotation quand second panneau 32 passe de sa position d'obturation à sa position basse.

L'angle α entre le bras pivotant 42 et le second panneau 32 reste donc constant quand le second panneau 32 passe de sa position d'obturation à sa position haute, comme on peut le voir en comparant les figures 1 et 2, mais il s'accroît quand second panneau 32 passe de sa position d'obturation à sa position basse, comme on peut le voir en comparant les figures 1 et 3.

Le dispositif de fixation 43 de la seconde extrémité 422 du bras pivotant 42 sur le second panneau 32, illustré sur les figures 9 et 10, comprend le troisième axe transversal 431, fixe et solidaire du second panneau 32, un manchon 433 solidaire de la seconde extrémité 422 du bras pivotant 42 et monté libre en rotation autour de l'axe fixe 431, et au moins un pion rétractable 435 lié au second panneau 32, et plus généralement quatre pions rétractables disposés en carré.

Le troisième axe transversal 431 est cylindrique et est fixé sur un côté plan 323 du second panneau 32 s'étendant perpendiculairement à la direction transversale.

Le manchon 433 comprend une partie centrale cylindrique entourant le troisième axe transversal 431, et des première et seconde collerettes en anneau traversées par le troisième axe transversal 431 et s'étendant dans des plans perpendiculaires à cet axe. La partie centrale cylindrique s'étend entre les collerettes en anneau. La première collerette en anneau s'étend en vis à vis du côté plan 323 du second panneau 32 et est percé d'au moins un orifice de blocage 434, généralement quatre disposés en carré.

Les pions rétractables 435 sont fixes en rotation autour du troisième axe transversal 431 et sélectivement mobiles en translation transversale par rapport au second panneau 32 entre une position de blocage dans laquelle les pions rétractables 435 font saillies sur le côté plan 323 du deuxième panneau 32 et sont engagés dans les orifices de blocage 434 du manchon 433, et une position de libération dans laquelle les pions rétractables 435 sont rétractés dans le second panneau 32 et ne sont pas engagés dans les orifices de blocage 434.

Dans la première position, le dispositif de fixation 43 est dans sa configuration rigide, et dans la deuxième position, le dispositif de fixation 43 est dans sa configuration de rotation.

Plus précisément, le dispositif de fixation 43 comprend un troisième moteur 436, une tige de liaison 437 transversale fixée par une extrémité au troisième moteur 436, et une plaque de support 438 solidaire de la tige de liaison 437 par une extrémité de celle-ci opposée au troisième moteur 436, tous situés à l'intérieur du second panneau 32.

La plaque de support 438 est une plaque de tôle plane s'étendant parallèlement et à proximité du côté plan 323 du second panneau, présentant un renfoncement central 439 faisant saillie du côté opposé au côté plan 323.

Le troisième moteur 436 est rigidement fixé au second panneau, à distance du côté plan 323, et la tige de liaison 437 relie le moteur 436 au renfoncement central 439 de la plaque de support 438.

Les pions rétractables 435 sont solidaires de la face de la plaque de support 438 tournée vers le côté plan 323, leurs extrémités libres pointant vers celui-ci.

Le côté plan 323 présente des trous en regard des pions rétractables 435.

Le dispositif de fixation 43 comprend au moins une plaque d'appui 440 parallèle à la plaque de support 438 et solidaire du second panneau 32, et des ressorts de rappel à spirale 441 interposés entre la plaque d'appui 439 et la plaque de support 438.

La plaque d'appui 440 est située du côté opposé au côté plan 323 du second panneau 32 par rapport à la plaque de support 438.

Les ressorts de rappel 441 sollicitent la plaque de support 438 vers le côté plan 323.

Quand le moteur 436 ne fonctionne pas, la plaque de support 438 vient en appui contre le côté plan 323 sous l'effet de la force de rappel des ressorts 441, les pions rétractables 435 traversant alors les trous du côté plan 323 et pénétrant dans les orifices de blocage 434 du manchon 433.

Quand le moteur 436 est actionné, il déplace la tige de liaison 437 et la plaque de support 438 transversalement dans une direction opposée au côté plan 323, comprimant les ressorts de rappels 441 entre les plaques de support 438 et d'appui 440, et rétractant les pions 435 dans le second panneau 22.

On notera que la plaque d'appui 440 présente un orifice central dans lequel est engagé le renfoncement central 439 de la plaque de support 438, cet orifice central comprenant un bord servant de guide en translation au renfoncement central 439.

On notera également que le troisième axe transversal 431 comprend un rebord radial à son extrémité opposée à la face plane 323, ce rebord s'étendant le long de la seconde collerette en anneau du manchon 433 et bloquant le manchon en translation le long du troisième axe transversal 431. Ce rebord sert également de guide en rotation au manchon 433.

Les figures 11 à 15 représentent le second dispositif d'articulation 50.

Celui-ci comprend, outre le second axe transversal 51 solidaire de la caisse 10, un penne fixe 52 solidaire du second côté inférieur 322 du second panneau 32, un penne mobile 53 lié au penne fixe et mobile en rotation par rapport au penne fixe 52 entre une position de blocage du second axe transversal 51 et une position de libération du second axe transversal 51, un second ressort 54 de rappel du penne mobile 53 en position de libération, un doigt de blocage 55 du penne mobile 53 en position de blocage, et un quatrième moteur 56 de déplacement du doigt de blocage 55 par l'intermédiaire d'une tige 57.

La figure 11, sur laquelle le second dispositif d'articulation 50 est dans sa configuration d'articulation et le panneau mobile 32 dans sa position d'obturation, montre que le penne fixe 52 comprend une tête fixe 521 présentant en coupe perpendiculairement à la direction transversale une forme de crochet, ce crochet étant fermé sur 180° environ du côté arrière et ouvert sur 180° environ du côté avant dans la position représentée sur la figure 11.

Le penne mobile 53 comprend également une tête mobile 531 présentant en coupe perpendiculairement à la direction transversale une forme de crochet.

Le penne mobile 53 est dans sa position de blocage quand le second dispositif d'articulation 50 est dans sa configuration d'articulation, et dans sa position de libération quand le second dispositif d'articulation 50 est dans sa configuration de libération. Dans cette position de blocage et dans la position du panneau mobile 32 représentée sur la figure 11, le crochet formé par la tête mobile 531 est fermé sur 270° environ et ouvert sur 90° environ vers l'arrière et le bas.

Comme le montre la figure 11, le second axe transversal 51, dans la configuration d'articulation, est bloqué entre les deux crochets formés par les têtes fixes et mobiles 521 et 531, les deux têtes l'entourant complètement.

La figure 12 montre le penne mobile 53 dans sa position de libération, le second panneau étant proche de sa position d'obturation. Le second ressort de rappel 54 est un ressort de type pince à linge, sollicitant le penne mobile 53 en rotation autour d'un axe de rotation 532. Cet axe de rotation 532 est transversal et solidaire du penne fixe 52. Vu sur la figure 11, il traverse le penne mobile 53 approximativement en son centre, et il est situé à proximité des têtes fixe et mobile 521 et 531, à la verticale et au dessus de ces deux têtes. On peut voir en comparant les figures 11 et 12 que la tête mobile passe de sa position de blocage à sa position de libération en effectuant approximativement un quart de tour, la tête mobile 531 pivotant vers l'avant, l'ouverture de la tête étant tournée vers l'avant et le bas en position de libération.

Le crochet formé par cette tête mobile 531 est constitué deux bras, un bras court 533 situé relativement plus à l'avant dans la position de la figure 11, et un bras long 534 situé relativement plus à l'arrière dans la position de la figure 11 et se terminant en pointe. Dans la position de libération du penne mobile 53, le bras long 534 est situé juste en avant de l'ouverture du penne fixe 52.

Les figures 12, 13 et 11 montrent dans cet ordre plusieurs positions occupées successivement par le second panneau 32 quand il passe de sa position haute à sa position d'obturation.

On voit clairement que le penne fixe 52 vient s'engager autour du second axe transversal 51, et que le bras long 534 du penne mobile 53, au cours de ce mouvement, est repoussé par le second axe transversal 51 vers l'arrière, de telle sorte que le penne mobile 53 passe de sa position de libération à sa position de blocage contre l'effort exercé par le second ressort de rappel 54, emprisonnant ainsi le second axe transversal 51.

Le doigt de blocage 55 présente une forme générale cylindrique et s'étend verticalement quand le second panneau 32 est en position d'obturation. Il se trouve, sur la figure 11, au dessus et aligné avec le second axe transversal 51 et l'axe de rotation 532.

Ce doigt de blocage 55 est mobile en translation parallèlement à son axe entre une position de blocage du penne mobile 53 en position de blocage relativement plus basse sur la figure 11, et une position de libération du penne mobile, relativement plus haute.

Le second panneau 32 comprend une tôle de support 324 pliée en U, fixée rigidement sur le second panneau 32. Cette tôle de support 324 en U comprend une plaque supérieure 325 et une plaque inférieure 326 mutuellement parallèles, situées respectivement relativement plus haut et relativement plus bas sur la figure 11. Les deux plaques parallèles s'étendent perpendiculairement au doigt de blocage 55 et comprennent des trous respectifs dans le prolongement l'un de l'autre. Le doigt de blocage 55 est engagé dans ces deux trous, qui lui servent de guide en translation.

Des rondelles supérieure et inférieure 551 et 552 sont fixées rigidement sur le doigt de blocage 55, le doigt traversant ces rondelles. La rondelle inférieure 552 est située entre les plaques supérieure et inférieure 325 et 326, et la rondelle supérieure 551 est située au dessus de la plaque supérieure 325 sur la figure 11

En position de blocage du doigt de blocage 55, les rondelles supérieure et inférieure 551 et 552 viennent buter respectivement sur les plaques supérieure et inférieure 325 et 326 de la tôle de support 324, bloquant ainsi la course du doigt.

Un troisième ressort de rappel 58 en spirale est traversé par le doigt de blocage 55. Il prend appui par une extrémité inférieure sur la rondelle inférieure 552 et par une extrémité supérieure sur la plaque supérieure 325 et sollicite le doigt de blocage 55 vers le penne mobile 53.

Le penne mobile 53 comprend une seconde extrémité 535 opposée à la tête 531 par rapport à l'axe de rotation 532 et présentant une section sensiblement rectangulaire dans un plan perpendiculaire à la direction transversale, comme représenté sur les figures 11 à 13.

Une encoche latérale 536 est ménagée dans cette seconde extrémité 535, à un angle situé en haut et du côté arrière de la seconde extrémité sur la figure 11.

Cette encoche 536 est située dans le prolongement du doigt de blocage 55 dans la position de blocage du penne mobile 53, le doigt de blocage 55 venant s'engager dans cette encoche sous l'effet de la force de rappel du troisième ressort de rappel 58 qui le sollicite vers le penne mobile 53. Une fois le doigt engagé, le penne mobile 53 ne peut plus pivoter autour de l'axe de rotation 532 vers sa position de libération sous l'effet du second ressort de rappel 54, le doigt bloquant le mouvement de rotation.

Ainsi, quand le second panneau 32 passe de sa position haute à sa position d'obturation, le second axe transversal 51 fait d'abord pivoter le penne mobile 53 dans sa position de blocage, puis le doigt de blocage 55 vient s'engager dans l'encoche 536.

Le penne mobile 53 est alors bloqué en position de blocage et le second axe transversal 51 est bloqué entre les pennes fixes et mobiles 52 et 53.

Une extrémité 553 du doigt de blocage 55 opposée au penne mobile 53 est reliée au moteur 56 par la tige 57.

Le moteur 56 est solidaire du second panneau 32. Quand ce moteur 56 est actionné, il déplace le doigt de blocage 55 dans un sens qui éloigne le doigt du penne mobile 53, contre la force de rappel du troisième ressort 58, jusqu'à la position de libération du doigt de blocage.

Dans cette position de libération, le doigt est entièrement dégagé de l'encoche latérale 536, le penne mobile 53 pivotant alors sous l'effet de la force de rappel du second ressort 54 jusqu'à sa position de libération. Le second axe transversal 51 n'est ainsi plus bloqué entre les pennes fixe et mobile 52 et 53.

On notera que la seconde extrémité 535 du penne mobile 53 présente une face tournée vers le doigt de blocage 55 comprenant une bosse 537. Quand le penne mobile 53 passe de sa position de libération à sa position de blocage, la bosse 537 repousse dans un premier temps le doigt de blocage 55 au delà de sa position de libération, en comprimant le troisième ressort de rappel 58. Une fois la bosse 537 franchie, le doigt peut s'engager dans l'encoche 536. Cette bosse permet de maintenir le penne mobile 53 dans sa position de libération quand le second panneau 32 est en position haute, ce penne mobile se présentant donc de façon adéquate, quand le second panneau regagne sa position d'obturation, pour que les deux pennes puissent bloquer le second axe transversal 51.

On voit sur la figure 15 l'agencement des différents éléments mentionnés ci-dessus dans un plan vertical transversal.

Le second axe transversal 51 comprend une tige cylindrique centrale 511 transversale, et deux montants 512 solidarisant des extrémités opposées de la tige centrale 511 avec la caisse 10.

Le penne fixe 52 est une pièce plus étroite suivant la direction transversale que la tige centrale 511, et vient se placer au centre de cette tige centrale 511 en configuration d'articulation du dispositif d'articulation 50. Le penne fixe 52 est solidaire de la tôle de support 324.

La tête 531 du penne mobile 53 comprend en fait deux jambes identiques, présentant chacune la section perpendiculaire à la direction transversale décrite ci-dessus. Ces jambes sont disposées de chaque côté transversal du penne fixe 52, et sont réunies par la seconde extrémité 535. Le penne mobile 53 est bloqué en translation transversalement par deux montants 327, solidaires du second panneau 32 et disposés des deux côtés latéraux transversaux opposés du penne mobile 53.

L'axe de rotation 532 est fixé par ses deux extrémités opposées aux deux montants opposés 327 du second panneau 32, et traverse le penne fixe 52 et les deux jambes du penne mobile 53.

Cette disposition des pennes fixe et mobile 52 et 53 permet au second panneau de pivoter autour du second axe transversal 51 quand le second dispositif de fixation 50 est en configuration d'articulation, c'est-à-dire quand le penne mobile 53 est dans sa position de blocage. Le second panneau 32 bascule vers l'arrière, comme on peut le voir sur la figure 14.

## Revendications

1. Véhicule automobile, notamment de type break, comprenant une caisse (10) présentant une face arrière (11) percée d'une ouverture de chargement arrière (20) délimitée par des premier et second bords transversaux opposés (21, 22) et des premier et second bords latéraux opposés, un volet arrière (30) mobile par rapport à la caisse (10) entre une position fermée dans laquelle le volet arrière (30) obture l'ouverture arrière (20) et au moins une position ouverte dans laquelle le volet arrière (30) dégage l'ouverture arrière (20), et un premier dispositif d'articulation (40) du volet arrière (30) sur la caisse (10), le volet (30) comprenant des premier et second panneaux (31, 32), le premier panneau (31) s'étendant dans la position fermée du volet (30) le long du premier bord transversal (21) de l'ouverture de chargement (20) entre les premier et second bords latéraux, le second panneau (32) s'étendant dans la position fermée du volet (30) le long du second bord transversal (22) de l'ouverture de chargement (20) entre les premier et second bords latéraux, le premier panneau (31) étant escamotable dans le second panneau (32), le premier dispositif d'articulation (40) comprenant des moyens pour faire pivoter le second panneau (32) autour d'un premier axe transversal (41) relativement plus proche du premier bord transversal (21) que du second, entre une position d'obturation correspondant à la position fermée du volet arrière (30) et une position haute plus proche du premier bord transversal (21) de l'ouverture arrière (20) que la position d'obturation, le volet arrière (30) adoptant ainsi sélectivement sa position fermée ou une première position ouverte dans laquelle le premier panneau (31) est escamoté dans le second panneau (32) et le second panneau (32) est dans sa position haute, **caractérisé en ce que**, en position fermée du volet arrière (30), le premier axe transversal (41) s'étend à distance à la fois d'un premier côté transversal supérieur (311) délimitant le premier panneau (31) du côté du premier bord transversal (21), et d'un premier côté transversal inférieur (312) délimitant le premier panneau (31) du côté du second panneau (32).

2. Véhicule selon la revendication 1, **caractérisé en ce que**, en position fermée du volet arrière (30), le premier axe transversal (41) s'étend à proximité du volet arrière (30), d'un côté avant de celui-ci.

3. Véhicule selon la revendication 1 ou 2, **caractérisé en ce qu'**il comprend un second dispositif d'articulation (50) du second panneau (32) par rapport au second bord transversal (22) de l'ouverture (20), ce second dispositif d'articulation dans laquelle le second panneau (32) est lié au second bord transversal (22) de l'ouverture (20), ou une configuration de libération dans laquelle le second panneau (32) est libre par rapport au second bord transversal (22), ce second dispositif d'articulation (50) étant dans sa configuration de libération quand le second panneau (32) passe de sa position d'obturation à sa position haute.

4. Véhicule selon la revendication 3, **caractérisé en ce que** les moyens pour faire pivoter le second panneau (32) comprennent au moins un bras pivotant (42) présentant des première et seconde extrémités opposées (421, 422) et monté par sa première extrémité (421) pivotant autour du premier axe transversal (41), et un dispositif de fixation (43) du bras pivotant (42) par sa seconde extrémité (422) sur le second panneau (32).

5. Véhicule selon la revendication 4, **caractérisé en ce que** le premier dispositif d'articulation (40) comprend un amortisseur à gaz (47), cet amortisseur comprenant un corps (471) lié à la caisse (10), et un piston (472) lié au bras pivotant (42) et coulissant à l'intérieur du corps (471).

6. Véhicule selon la revendication 4 ou 5, **caractérisé en ce que**, dans la configuration d'articulation du second dispositif d'articulation (50), le second panneau (32) est libre en rotation par rapport au second bord transversal (22) de l'ouverture (20) autour d'au moins un second axe transversal (51), et est sélectivement mobile entre sa position d'obturation et une position basse dans laquelle le second panneau (32) a pivoté vers l'extérieur du véhicule autour dudit second axe transversal (51) , le volet arrière (30) adoptant ainsi sélectivement sa position fermée ou une seconde position ouverte dans laquelle le premier panneau (31) est escamoté dans le second panneau (32) et le second panneau (32) est dans sa position basse.

7. Véhicule selon la revendication 6, **caractérisé en ce que** le bras pivotant (42) est téléscopique, sa longueur variant sélectivement entre un minimum et un maximum, la longueur du bras pivotant (42) étant minimum dans la position d'obturation et dans la position haute du second panneau (32), et maximum dans la position basse du second panneau (32).

8. Véhicule selon la revendication 7, **caractérisé en ce que** le premier dispositif d'articulation (40) comprend un second moteur commandant le déploiement et la rétractation du bras pivotant (42).

9. Véhicule selon l'une quelconque des revendications 6 à 8, **caractérisé en ce que** le dispositif de fixation (43) de la seconde extrémité (422) du bras pivotant (42) sur le second panneau (32) adopte sélectivement une configuration rigide dans laquelle le bras pivotant (42) est rigidement lié au second panneau (32), ou une configuration de rotation dans laquelle la seconde extrémité (422) est liée au second panneau (32) et libre en rotation autour d'un troisième axe transversal (431) par rapport à celui-ci , le dispositif de fixation (43) étant dans sa configuration rigide quand le second panneau (32) passe de sa position d'obturation à sa position haute et dans sa configuration de rotation quand second panneau (32) passe de sa position d'obturation à sa position basse.

10. Véhicule selon la revendication 9, **caractérisé en ce que** le dispositif de fixation (43) de la seconde extrémité (422) du bras pivotant (42) sur le second panneau (32) comprend le troisième axe transversal (431) fixe et solidaire du second panneau (32), un manchon (433) solidaire de la seconde extrémité (422) du bras pivotant (42) et monté libre en rotation autour du troisième axe transversal (431), et au moins un pion rétractable (435) lié au second panneau (32), le manchon (433) comprenant un orifice de blocage (434), le pion rétractable (435) étant fixe en rotation autour du troisième axe transversal (431) et sélectivement mobile par rapport au second panneau (32) entre une position de blocage dans laquelle le pion rétractable (435) est engagé dans l'orifice de blocage (434) du manchon (433), et une position de libération dans laquelle le pion rétractable (435) n'est pas engagé dans l'orifice de blocage (434).

11. Véhicule selon l'une quelconque des revendications précédentes, **caractérisé en ce que** le premier dispositif d'articulation (40) comprend un premier moteur (45) commandant le pivotement du second panneau (32) autour du premier axe transversal (41).

## Patentansprüche

1. Kraftfahrzeug, insbesondere vom Typ Kombi, mit einem Fahrzeugaufbau (10) mit einer Heckseite (11), die mit einer hinteren Ladeöffnung (20) versehen ist, welche von einem ersten und einem diesem entgegengesetzten zweiten Querrand (21, 22) und von einem ersten und einem diesem entgegengesetzten zweiten Seitenrand begrenzt wird, einer Heckklappe (30), die bezüglich des Fahrzeugaufbaus (10) zwischen einer Schließstellung, in welcher die Heckklappe (3) die hintere Öffnung (20) verschließt, und zumindest einer Offenstellung verstellbar ist, in welcher die Heckklappe (30) die hintere Öffnung (20) freigibt, sowie einer ersten Anlenkvorrichtung (40) zum Anlenken der Heckklappe (30) am Fahrzeugaufbau (10), wobei die Klappe (30) ein erstes und ein zweites Feld (31, 32) enthält, wobei das erste Feld (31) in Schließstellung der Klappe (30) sich entlang des ersten Querrandes (21) der Ladeöffnung (20) zwischen dem ersten und dem zweiten Seitenrand erstreckt, wobei das zweite Feld (32) in Schließstellung der Klappe (30) sich entlang des zweiten Querrandes (22) der Ladeöffnung (20) zwischen dem ersten und dem zweiten Seitenrand erstreckt, wobei das erste Feld (31) in das zweite Feld (32) einklappbar ist, wobei die erste Anlenkvorrichtung (40) Mittel zum Verschwenken des zweiten Feldes (32) um eine erste Querachse (41) enthält, die dem ersten Querrand (21) relativ näher liegt als dem zweiten, und zwar zwischen einer Sperrstellung, die der Schließstellung der Heckklappe (30) entspricht, und einer oberen Stellung, die dem ersten Querrand (21) der hinteren Öffnung (20) näher liegt als die Sperrstellung, wobei die Heckklappe (30) somit selektiv ihre Schließstellung bzw. einer erste Offenstellung einnimmt, in welcher das erste Feld (31) in das zweite Feld (32) eingeklappt ist und das zweite Feld (32) sich in seiner oberen Stellung befindet, **dadurch gekennzeichnet, dass** in Schließstellung der Heckklappe (30) die erste Querachse (41) im Abstand von einer ersten oberen Querseite (311), welche das erste Feld (31) auf der Seite des ersten Querrandes (21) begrenzt, und zugleich im Abstand von einer ersten unteren Querseite (312) verläuft, welche das erste Feld (31) auf der Seite des zweiten Feldes (32) begrenzt.

2. Fahrzeug nach Anspruch 1, **dadurch gekennzeichnet, dass** in Schließstellung der Heckklappe (30) die erste Querachse (41) sich in der Nähe der Heckklappe (30) auf einer Vorderseite derselben erstreckt.

3. Fahrzeug nach Anspruch 1 oder 2, **dadurch gekennzeichnet, dass** es eine zweite Anlenkvorrichtung (50) zum Anlenken des zweiten Feldes (32) bezüglich des zweiten Querrandes (22) der Öffnung (20) enthält, wobei diese zweite Anlenkvorrichtung (50) selektiv einen Anlenkzustand einnimmt, in welchem das zweite Feld (32) mit dem zweiten Querrand (22) der Öffnung (20) verbunden ist, oder aber einen Freigabezustand, in welchem das zweite Feld (32) bezüglich des zweiten Querrandes (22) freigegeben ist, wobei diese zweite Anlenkvorrichtung (50) sich in ihrem Freigabezustand befindet, wenn das zweite Feld (32) von seiner Sperrstellung in seine obere Stellung übergeht.

4. Fahrzeug nach Anspruch 3, **dadurch gekennzeichnet, dass** die Mittel zum Verschwenken des zweiten Feldes (32) zumindest einen Schwenkarm (42) enthalten, der ein erstes und ein diesem entgegengesetztes zweites Ende (421, 422) aufweist und mit seinem ersten Ende (421) um die erste Querachse (41) schwenkbeweglich gelagert ist, sowie eine Befestigungsvorrichtung (43) zum Befestigen des Schwenkarms (42) mit seinem zweiten Ende (422) am zweiten Feld (32).

5. Fahrzeug nach Anspruch 4, **dadurch gekennzeichnet, dass** die erste Anlenkvorrichtung (40) einen Gasstoßdämpfer (47) enthält, wobei dieser Stoßdämpfer einen mit dem Fahrzeugaufbau (10) verbundenen Körper (471) und einen mit dem Schwenkarm (42) verbundenen und innerhalb des Körpers (471) gleitbeweglichen Kolben (472) enthält.

6. Fahrzeug nach Anspruch 4 oder 5, **dadurch gekennzeichnet, dass** im Anlenkzustand der zweiten Anlenkvorrichtung (50) das zweite Feld (32) bezüglich des zweiten Querrandes (22) der Öffnung (20) um zumindest eine zweite Querachse (51) drehbar ist und selektiv zwischen seiner Sperrstellung und einer unteren Stellung verstellbar ist, in welcher das zweite Feld (32) um die genannte zweite Querachse (51) herum nach außerhalb des Fahrzeugs verschwenkt ist, wobei die Heckklappe (30) somit selektiv ihre Schließstellung oder eine zweite Offenstellung einnimmt, in welcher das erste Feld (31) in das zweite Feld (32) eingeklappt ist und das zweite Feld (32) sich in seiner unteren Stellung befindet.

7. Fahrzeug nach Anspruch 6, **dadurch gekennzeichnet, dass** der Schwenkarm (42) teleskopartig ist, wobei seine Länge selektiv zwischen einem Minimum und einem Maximum veränderbar ist, wobei die Länge des Schwenkarms (42) in der Sperrstellung und in der oberen Stellung des zweiten Feldes (32) minimal und in der unteren Stellung des zweiten Feldes (32) maximal ist.

8. Fahrzeug nach Anspruch 7, **dadurch gekennzeichnet, dass** die erste Anlenkvorrichtung (40) einen zweiten Motor enthält, welcher das Ausfahren und Einfahren des Schwenkarms (42) steuert.

9. Fahrzeug nach einem der Ansprüche 6 bis 8, **dadurch gekennzeichnet, dass** die Befestigungsvorrichtung (43) zum Befestigen des zweiten Endes (422) des Schwenkarms (42) am zweiten Feld (32) selektiv einen starren Zustand einnimmt, in welchem der Schwenkarm (42) starr mit dem zweiten Feld (32) verbunden ist, oder einen drehbaren Zustand, in welcher das zweite Ende (422) mit dem zweiten Feld (32) verbunden und um eine dritte Querachse (431) bezüglich desselben verdrehbar ist, wobei die Befestigungsvorrichtung (43) ihren starren Zustand einnimmt, wenn das zweite Feld (32) aus seiner Sperrstellung in seine obere Stellung übergeht, und ihren drehbaren Zustand, wenn das zweite Feld (32) aus seiner Sperrstellung in seine untere Stellung übergeht.

10. Fahrzeug nach Anspruch 9, **dadurch gekennzeichnet**, das die Befestigungsvorrichtung (43) zum Befestigen des zweiten Endes (422) des Schwenkarms (42) am zweiten Feld (32) die dritte Querachse (431) enthält, die feststehend ist und fest mit dem zweiten Feld (32) verbunden ist, sowie eine Hülse (433), die fest mit dem zweiten Ende (422) des Schwenkarms (42) verbunden und um die dritte Querachse (431) drehbar gelagert ist, und zumindest einen einfahrbaren Zapfen (435), der mit dem zweiten Feld (32) verbunden ist, wobei die Hülse (433) eine Sicherungsöffnung (434) aufweist, der einfahrbare Zapfen (435) um die dritte Querachse (431) drehfest und bezüglich des zweiten Feldes (32) zwischen einer Sicherungsstellung, in welcher der einfahrbare Zapfen (435) in die Sicherungsöffnung (434) der Hülse (433) eingreift, und einer Freigabestellung selektiv verstellbar ist, in welcher der einfahrbare Zapfen (435) nicht in die Sicherungsöffnung (434) eingreift.

11. Fahrzeug nach einem der vorangehenden Ansprüche, **dadurch gekennzeichnet, dass** die erste Anlenkvorrichtung (40) einen ersten Motor (45) enthält, der die Schwenkbewegung des zweiten Feldes (32) um die erste Querachse (41) steuert.

## Claims

1. An automobile vehicle, particularly of the station wagon type, comprising a body (10) having a rear face (11) which is provided with a rear loading aperture (20) delimited by opposite first and second transverse edges (21, 22) and by opposite first and second lateral edges, a rear door (30) which can move in relation to the body (10) between a closed position in which the rear door (30) closes the rear aperture (20) and at least one open position in which the rear door (30) opens the rear aperture (20), and a first device (40) for pivoting the rear door (30) on the body (10), said door (30) comprising first and second panels (31, 32), said first panel (31) extending in the closed position of the door (30) along the first transverse edge (21) of the loading aperture (20) between the first and second lateral edges, the second panel (32) extending in the closed position of the door (30) along the second transverse edge (22) of the loading aperture (20) between the first and second lateral edges, the first panel (31) being retractable into the second panel (32), the first pivoting device (40) comprising means for causing the second panel (32) to pivot about a first transverse pin (41), which is closer to the first transverse edge (21) than to the second, between a closed position corresponding to the closed position of the rear door (30) and a raised position which is closer to the first transverse edge (21) of the rear aperture (20) than is the closed position, the rear door (30) thus selectively assuming its closed position or a first open position in which the first panel (31) is retracted into the second panel (32) and the second panel (32) is in its raised position, **characterised in that**, in the closed position of the rear door (30), the first transverse pin (41) extends at a distance both from a first upper transverse edge (311) delimiting the first panel (31) on the side of the first transverse edge (21), and from a first lower transverse edge (312) delimiting the first panel (31) on the side of the second panel (32).

2. A vehicle according to, claim 1, **characterised in that** in the closed position of the rear door (30) the first transverse pin (41) extends in the vicinity of the rear door (30), on a front side of the latter.

3. A vehicle according to claim 1 or 2, **characterised in that** it comprises a second device (50) for pivoting the second panel (32) in relation to the second transverse edge (22) of the aperture (20), said second pivoting device in which the second panel (32) is joined to the second transverse edge (22) of the aperture (20), or a release configuration in which the second panel (32) is free in relation to the second transverse edge (22), said second pivoting device (50) being in its release configuration when the second panel (32) moves from its closed position to its raised position.

4. A vehicle according to claim 3, **characterised in that** the means for causing the second panel (32) to pivot comprise at least one pivoting arm (42) having first and second opposite ends (421, 422) and mounted at its first end (421) so that it can pivot about the first transverse pin (41), and a device (43) for fixing the pivoting arm (42) by its second end (422) to the second panel (32)

5. A vehicle according to claim 4, **characterised in that** the first pivoting device (40) comprises a gas shock absorber (47), said shock absorber comprising a body (471) attached to the body (10), and a piston (472) joined to the pivoting arm (42) and sliding inside the body (471).

6. A vehicle according to claim 4 or 5, **characterised in that** in the pivoting configuration of the second pivoting device (50) the second panel (32) is freely rotatable in relation to the second transverse edge (22) of the aperture (20) about at least one second transverse pin (51), and can move selectively between its closed position and a lowered position in which the second panel (32) has pivoted towards the outside of the vehicle about the aforementioned second transverse pin (51), the rear door (30) thus selectively assuming its closed position or a second open position in which the first panel (31) is retracted into the second panel (32) and the second panel (32) is in its lowered position.

7. A vehicle according to claim 6, **characterised in that** the pivoting arm (42) is telescopic, its length varying selectively between a minimum and a maximum, the length of the pivoting arm (42) being a minimum in the closed position and in the raised position of the second panel (32), and a maximum in the lowered position of the second panel (32).

8. A vehicle according to claim 7, **characterised in that** the first pivoting device (40) comprises a second motor which controls the deployment and retraction of the pivoting arm (42).

9. A vehicle according to one any of claims 6 to 8, **characterised in that** the device (43) for fixing the second end (422) of the pivoting arm (42) to the second panel (32) selectively assumes a rigid configuration in which the pivoting arm (42) is rigidly attached to the second panel (32), or a rotational configuration in which the second end (422) is attached to the second panel (32) and is freely rotatable about a third transverse pin (431) in relation to the latter, the fixing device (43) being in its rigid configuration when the second panel (32) moves from its closed position to its raised position and being in its rotational configuration when the second panel (32) moves from its closed position to its lowered position.

10. A vehicle according to claim 9, **characterised in that** the device (43) for fixing the second end (422) of the pivoting arm (42) to the second panel (32) comprises the third transverse pin (431) which is fixed to and integral with the second panel (32), a sleeve (433) attached to the second end (422) of the pivoting arm (42) and mounted so that it is freely rotatable about the third transverse pin (431), and at least one retractable stud (435) attached to the second panel (32), the sleeve (433) containing a locking aperture (434), the retractable stud (435) being fixed in rotation about the third transverse pin (431) and selectively movable in relation to the second panel (32) between a locking position in which the retractable stud (435) engages in the locking aperture (434) of the sleeve (433) and a release position in which the retractable stud (435) is not engaged in the locking aperture (434).

11. A vehicle according to any one of the preceding claims, **characterised in that** the first pivoting device (40) comprises a first motor (45) which controls the pivoting of the second panel (32) about the first transverse pin (41).
